# EUROPÄISCHE PATENTANMELDUNG

(11) **EP 1 519 090 A1**
(43) Veröffentlichungstag der Anmeldung: **30.03.2005**
(21) Anmeldenummer: 04020733.4
(22) Anmeldetag: 01.09.2004
(51) Int. Cl.: F16K 11/087

(54) **Dreiwegeventil**

(30) Priorität: 29.09.2003 DE 10345614
(71) Anmelder: Robert Bosch GmbH, 70442 Stuttgart (DE)
(72) Erfinder: Schmitt, Manfred, 64646 Heppenheim (DE); Mann, Karsten, 70469 Stuttgart (DE)

(57) **Zusammenfassung**

Die Erfindung betrifft ein Dreiwegeventil (14) zur Steuerung von Volumenströmen in einem Kühl-/Heizsystem (24) eines Kraftfahrzeuges, mit einem Ventilkörper (42) und einem drehbar im Ventilkörper (42) angeordneten Drosselkörper (40 bzw. 41) mit im Wesentlichen kugelförmiger Oberfläche, wobei im Drosselkörper (40 bzw. 41) ein Verteilerkanal (46 bzw. 47) zur Verbindung zweier Anschlüsse (48 bzw. 50) des Ventils (14) ausgebildet ist.

Erfindungsgemäß wird vorgeschlagen, dass die Oberfläche des Drosselkörpers (40 bzw. 41) eine Fase (54 bzw. 55) zur Öffnung eines dritten Anschlusskanals (52) besitzt.

Des weiteren betrifft die Erfindung einen Kühl- und Heizkreislauf (24) eines Kraftfahrzeuges mit einem solchen Ventil (14).

## Beschreibung

### Dreiwegeventil

Die Erfindung betrifft ein Dreiwegeventil zur Steuerung von Volumenströmen in einem Kühl- bzw. Heizsystem eines Kraftfahrzeuges, mit einem Ventilkörper und einem drehbar im Ventilkörper angeordneten Drosselkörper, mit einer im Wesentlichen kugelförmigen Oberfläche, wobei im Drosselkörper ein Verteilerkanal zur Verbindung zweier Anschlüsse des Ventils ausgebildet ist. Des weiteren betrifft die Erfindung einen Kühlund/oder Heizkreislauf eines Kraftfahrzeuges mit einem solchen Ventil.

### Stand der Technik

Um den Verbrennungsmotor eines Kraftfahrzeuges vor dem Überhitzen zu schützen und die Abwärme des Motors gegebenenfalls zur Heizung des Fahrgastraumes nutzen zu können, wird im Kühlsystem des Verbrennungsmotors, das heißt im Kühl- und/oder Heizkreislauf des Fahrzeuges ein Kühlmittel umgepumpt, das die überschüssige Wärme des Motors aufnehmen und abführen kann. Der Kühl- bzw. Heizkreislauf eines Kraftfahrzeuges umfasst im Allgemeinen verschiedene, miteinander verbundene Teilzweige, wie beispielsweise einen Kühlerzweig, einen Bypasszweig zur Umgehung des Kühlers oder auch einen Heizungswärmetauscherzweig zum Übertrag der Wärmeenergie in ein Heizungssystem für das Fahrzeug.

So kann beispielsweise über einen Kühler im Kühlerzweig eine überschüssige Wärmemenge des Kühlmittels an die Umgebung abgegeben werden bzw. ist es mit dem Heizungswärmetauscherzweig möglich, diese Wärmemenge einer weiteren Nutzung im Fahrzeug zuzuführen.

Die Verteilung der Kühlmittelströme auf die verschiedenen Zweige des Kühl- und/oder Heizkreislaufes des Kraftfahrzeuges wird über diverse Ventile gesteuert. So kann beispielsweise die gewünschte Kühlmitteltemperatur für den Verbrennungsmotor durch Mischen eines gekühlten und eines ungekühlten Kühlmittelstromes eingestellt werden.

In Motorkühlkreisläufen für Kraftfahrzeuge ist die Verwendung von Thermostatventilen bisher noch weit verbreitet. Hierbei wird das Mischverhältnis des gekühlten und des ungekühlten Kühlmittelstroms durch das dehnstoffbetriebene Thermostatventil in Abhängigkeit der Kühlmitteltemperatur eingestellt. So kann beispielsweise - bei kaltem Motor - das Kühlmittel nicht durch den Kühler geschickt werden, sondern über einen parallel zum Kühler angeordneten Bypaß direkt wieder dem Motor zugeführt werden. Nachteilig bei derartigen Thermostatventilen ist deren träge Ansprechcharakteristik, die insbesondere ein definiertes und schnelles Zurückschalten des Ventils nahezu unmöglich macht.

Zur bedarfsgerechten Regelung, d.h. zur Erzielung einer optimierten Verteilung der Kühlmittelströme im Kühlkreislauf eines Kraftfahrzeuges, werden im Rahmen eines Thermomanagements für das Kraftfahrzeug seit einiger Zeit steuerbare Ventile vorgeschlagen, die die bisherigen, in der Regel verwendeten Thermostatventile in Zukunft ersetzen sollen.

Aus der DE 35 16 502 A1 ist eine Temperatur-Regeleinrichtung für das Kühlmittel von Brennkraftmaschinen bekannt, die in der Vorlaufleitung bzw. der Bypassleitung eines Kühlkreislaufes ein Kühlmittelsteuerventil aufweist, welches in Abhängigkeit der Kühlmitteltemperatur mittels eines Stellmotors betätigbar ist. Der Stellmotor besteht aus einem elektrischen Stellantrieb, dessen abgangsseitiges Stellorgan getrieblich mit einem Ventilverschlussglied des Kühlmittelsteuerventils verbunden ist. Dem Ventil ist eine Steueranordnung zugeordnet, der einzelne, von Sensoren der Brennkraftmaschine erfasste Kennfeldgrößen, insbesondere die Kühlmitteltemperatur sowie die Außentemperatur, zugeführt werden können.

In der DE 41 09 498 A1 wird eine Vorrichtung zur Regelung der Temperatur einer Brennkraftmaschine vorgeschlagen, die mit einer Kühleinrichtung und einer diese beeinflussenden Steuereinrichtung versehen ist. Der Steuereinrichtung werden in Abhängigkeit von verschiedenen Betriebsparametem der Brennkraftmaschine unterschiedliche Temperatursollwerte vorgegeben, die als Daten im Steuergerät abgelegt sind. Darüber hinaus existiert im Steuergerät der DE 41 09 498 A1 ein sogenannter Sollwertgeber, der der Steuereinrichtung in Abhängigkeit von verschiedenen Einsatzbedingungen des Kraftfahrzeuges unterschiedliche Bereiche, beispielsweise von Temperatursollwerten, vorgibt.

Aus der DE 199 60 931 A1 ist ein Dreiwegeventil für einen Kühl-/Heizkreislauf einer Brennkraftmaschine bekannt, welches in Form eines Kükenventils ausgebildet ist, und dessen Drosselkörper elektrisch in Abhängigkeit von Betriebs- und Umgebungsparametern ansteuerbar ist. Der Drosselkörper des Ventils der DE 199 60 931 A1 hat eine im Wesentlichen kugelförmige Grundform und besitzt einen ihn durchdringenden Verteilerkanal. An einer im Wesentlichen parallel zur Drehachse des Drosselkörpers verlaufenden Mantelfläche ist der Drosselkörper des Ventils offen gestaltet, während die gegenüberliegende Mantelfläche geschlossen ist.

Ausgehend von den Ventilen des Standes der Technik liegt dem erfindungsgemäßen Ventil die Aufgabe zu Grunde, ein Ventil mit verbesserter Ansprechcharakteristik sowie der Möglichkeit der Vollabsperrung zu realisieren. Des weiteren liegt der Erfindung die Aufgabe zugrunde eine Kühl- bzw. Heizkreislauf zu realisieren, der es ermöglicht, die Kühlmittelvolumenstrome schnell und in definierter Weise zu steuern.

Die Aufgabe wird gelöst durch ein Dreiwegeventil mit den Merkmalen des Anspruchs 1 bzw. durch einen Kühl- bzw. Heizkreislauf gemäß Anspruch 11.

### Vorteile der Erfindung

Nach der Erfindung besitzt der Drosselkörper des erfindungsgemäßen Ventils eine im Wesentlichen kugelförmige Grundform, weist einen ihn durchdringenden Verteilerkanal auf und besitzt darüber hinaus eine Abschrägung in Art einer Fase, die in die Oberfläche des Drosselkörpers eingebracht ist. Das erfindungsgemäße Ventil besitzt zumindest einen Einlasskanal und zwei weitere Kanäle, die als Auslasskanäle genutzt werden können, so dass mit dem Ventil auch eine Mischfunktion darstellbar ist. Durch die Modifikation der Kugelgeometrie des Drosselkörpers auf Grund der erfindungsgemäßen Fase ist es möglich, in einem Kühl- und Heizkreislauf eines Kraftfahrzeuges beispielsweise den Kühlerzweig (zugeordnet einem ersten Auslasskanal des Ventils) zu schließen und gleichzeitig eine Öffnung des Bypasskanals (zugeordnet einem zweiten Auslasskanal des Ventils) herbeizuführen. In vorteilhafter Weise wird der Öffnungsquerschnitt zum Bypasskanal dabei bestimmt durch die Größe und Form der in die kugelförmige Grundform eingebrachten Fase. So lässt sich beispielsweise der Öffnungsquerschnitt zum Bypasskanal geringer ausgestalten, als der entsprechende Querschnitt zum Kühlerkanal, so dass auch die entsprechenden Durchflussmengen beziehungsweise die Ansprechcharakteristik bei der Öffnung des jeweiligen Kanals unterschiedlich gehalten werden können.

Insbesondere erlaubt das erfindungsgemäße Ventil, einen niedrigen Strömungswiderstand zum Kühlerzweig bei gleichzeitiger feinfühliger Öffnungscharakteristik des Kühlerzweiges. Das erfindungsgemäße Dreiwegemischventil hat den Vorteil, dass ein gerader Durchgang für die Ventilstellung "Kühler offen" realisiert werden kann, der insbesondere strömungstechnisch besonders günstig ist. Der Bypasszweig kann bei dem erfindungsgemäßen Ventil bei geschlossenem Kühlerzweig in gewünschter Weise angedrosselt werden.

Durch die in den abhängigen Ansprüchen aufgeführten Merkmale sind vorteilhafte Weiterbildungen und Verbesserungen des Ventils gemäß Anspruch 1 möglich.

In vorteilhafter Weise verläuft der im Inneren des Drosselkörpers angeordnete Verteilerkanal quer zur Drehachse des Ventils. Die Fase am Drosselkörper ist dabei unter einem von Null verschiedenen Winkel zur Drehachse ausgebildet. Durch Drehen der Kugel des Drosselkörpers kann die Verbindung des Einlasskanals mit dem kühlerseitigen Auslasskanal des Ventils mehr oder weniger stark geöffnet werden. Ebenso ist in vorteilhafter Weise eine Vollabsperrung des Ventils durch Verschließen des Zuflussanschlusses möglich. Durch eine entsprechende Anordnung der erfindungsgemäßen Fase an der Kugel des Drosselelementes ist es möglich, gleichzeitig neben der Steuerung des Volumenstroms in den Kühlerzweig, den Volumenstrom in einem Bypasszweig zu regeln. Durch die Form und Anordnung der Fase ist es insbesondere möglich, eine über weite Bereiche lineare Charakteristik der Mischverhältniskennlinie der beiden Auslasskanäle des Ventils zu erreichen.

In einer möglichen Ausführungsform des erfindungsgemäßen Ventils ist die am Drosselkörper ausgebildete Fase plan gestaltet.

Eine vorteilhafte Form des erfindungsgemäßen Ventils ergibt sich im Falle einer konkaven Fase im Drosselkörper des Ventils. In diesem Ausführungsbeispiel ist die Fläche des Drosselkörpers im Bereich der Fase nicht eben, sondern nach innen, das heißt in Richtung des Kugelmittelpunktes, gewölbt. Mit einer solchen Fase lässt sich die Öffnungscharakteristik des zugeordneten Ventilauslasses optimieren. Zur Anpassung und Optimierung der gewünschten Öffnungscharakteristik des der Fase zugeordneten Ausgangskanals des Ventils lässt sich sowohl die Stärke, als auch die Geometrie der Fase den gewünschten Erfordernissen anpassen. So ist es beispielsweise möglich, die Fase so auszugestalten, dass auf der gleichen Seite der Kugel (in Bezug auf den die Kugel durchdringenden Verteiler-Kanal) noch eine ausreichende geschlossene Kugeloberfläche zum Absperren eines weiteren Kanals besteht.

In vorteilhafter Weise verläuft der im Inneren des Drosselkörpers angeordnete Verteilerkanal quer zur Drehachse des Ventils. Die Fase am Drosselkörper ist dabei unter einem von Null verschiedenen Winkel zur Drehachse ausgebildet. Durch Drehen der Kugel des Drosselkörpers kann die Verbindung des Einlasskanals mit dem kühlerseitigen Auslasskanal des Ventils mehr oder weniger stark geöffnet werden. Ebenso ist in vorteilhafter Weise eine Vollabsperrung des Ventils durch Verschließen des Zuflussanschlusses möglich. Durch eine entsprechende Anordnung der erfindungsgemäßen Fase an der Kugel des Drosselelementes ist es möglich, gleichzeitig neben der Steuerung des Volumenstroms in den Kühlerzweig den Volumenstrom in einem Bypasszweig zu regeln. Durch die erfindungsgemäße Form und Anordnung der Fase ist es insbesondere möglich, eine über weite Bereiche lineare Charakteristik der Mischverhältniskennlinie der beiden Auslasskanäle des Ventils zu erreichen.

In einer besonders vorteilhaften Ausführungsform des erfindungsgemäßen Ventils besitzt der Dorsselkörper des Ventils auf einer Seite einer Ebene, die aufgespannt wird durch die Richtung eines Verteilerkanals im Drosselkörper und die Richtung der Drehachse des Drosselkörpers, sowohl eine Fase zur Öffnung eines dritten Anschlusskanals, als auch als ein hinreichend großes Oberflächensegment zum Verschließen eines Anschlusskanals, insbesondere eines Einlasskanals.

In vorteilhafter Weise ist das erfindungsgemäße Ventil derart ausgestaltet, dass zwei der drei Anschlüsse des Ventilkörpers zueinander fluchten und der dritte Anschluss in einem von Null verschiedenen Winkel zu den beiden ersten Anschlüssen gelegen ist. Mit einer derartigen Anordnung der Ventilanschlüsse ist es möglich, einen geraden Durchgang, beispielsweise für eine Ventilstellung "Kühler offen" zu realisieren, die sich insbesondere strömungsgünstig auswirkt.

Eine Vollabsperrung kann mit dem erfindungsgemäßen Ventil bei Verwendung nur zweier Dichtflächen realisiert werden. Die Kugel des Drosselkörpers ist dabei nur zuflussseitig und kühlerzweigseitig gedichtet. Aus der zweiseitigen Dichtung folgt, dass Strömungsanteile, die bei Mischstellungen der Drosselkugel durch den Verteilerkanal gegen eine seitliche Ventilgehäusewand strömen, um die Kugel herum in dem Bypasszweig abfließen können.

Mit dem erfindungsgemäßen Ventil ist es möglich, einen Kühl- und Heizkreislauf für ein Kraftfahrzeug zu realisieren, welcher sowohl ein definiertes Mischverhältnis zwischen dem Kühlerzweig und der Bypassleitung, als auch eine Vollabsperrung des Ventils ermöglicht. So lässt sich insbesondere durch die Vollabsperrung des Ventils eine schnelle Erwärmung des Verbrennungsmotors beispielsweise bei einem Kaltstart realisieren, indem für einen gewissen Zeitraum keinerlei Kühlmittel durch den Verbrennungsmotor umgepumpt wird. Das heißt, der Verbrennungsmotor wir bei stehendem Kühlmittel aufgeheizt und erreicht dadurch schneller seine Betriebstemperatur. Hat der Verbrennungsmotor dann seine Betriebstemperatur erreicht, erlaubt der erfindungsgemäße Kühl- und Heizkreislauf mittels des beschriebenen Ventils die Kühlmittelvolumenströme in optimierter Weise zu lenken. So ist es beispielsweise auch möglich, bei geschlossenem Kühlerzweig eine definierte Öffnung für die Bypassleitung zu erreichen.

Durch die günstigen Kennlinien- und Strömungsverhältnisse eignet sich das erfindungsgemäße Dreiwegeventil insbesondere für Kühlkreisläufe mit elektrisch betriebenen Pumpen. Diese können auf Grund der Stellmöglichkeiten des Ventils kleiner dimensioniert werden, so dass sich ihre Leistungsaufnahme verringert und sich der Gesamtwirkungsgrad des Kühl- und Heizkreislaufes damit verbessert. Neben einer regelbaren Pumpe und dem erfindungsgemäßen Dreiwegeventil kann ein zugeordnetes Steuergerät darüber hinaus beispielsweise auch ein dem Kühler zugeordnetes Kühlgebläse ansteuern und somit die Funktion und Leistungsfähigkeit des erfindungsgemäßen Kühlkreislaufes optimieren.

Weitere Vorteile des erfindungsgemäßen Dreiwegeventils sind in der nachfolgenden Zeichnung sowie in der zugehörigen Beschreibung des Ventils offenbart.

### Zeichnung

In der Zeichnung sind zwei Ausführungsbeispiele des erfindungsgemäßen Ventils sowie ein Ausführungsbeispiel des entsprechenden, erfindungsgemäßen Kühl- und Heizkreislaufs dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in diesem Text offenbart anzusehen sind.

### Es zeigt

- Figur 1: einen schematisch dargestellten, erfindungsgemäßen Kühl- und Heizkreislauf einer Brennkraftmaschine,
- Figur 2: eine schematische Darstellung eines Ausführungsbeispiels des erfindungsgemäßen Dreiwegeventils in einer ersten Ventilstellung,
- Figur 3: eine schematische Darstellung des Dreiwegeventils gemäß Figur 2 in einer zweiten Ventilstellung,
- Figur 4: einen Schnitt durch einen schematisierten Drosselkörper gemäß eines zweiten Ausführungsbeispiels des erfindungsgemäßen Dreiwegeventils in einer ersten Ventilstellung,
- Figur 5: einen Schnitt durch den Drosselkörper gemäß Figur 5 in einer zweiten Ventilstellung,
- Figur 6: einen Schnitt durch den Drosselkörper gemäß Figur 5 bzw. 6 in einer dritten Ventilstellung.

### Beschreibung der Ausführungsbeispiele

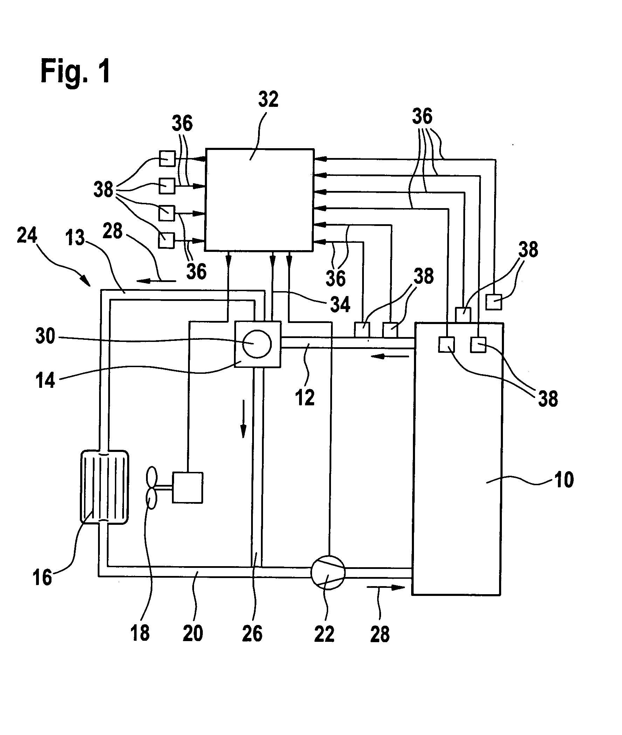

Figur 1 zeigt einen schematisiert dargestellten Kühlkreislauf einer Brennkraftmaschine. Von der Brennkraftmaschine 10 führt eine Zulaufleitung 12 für Kühlmittel über ein Ventil 14 und den Kühlerzulauf 13 zu einem Kühler 16, der mit einem elektrisch angetriebenen Gebläse 18 zusammenarbeitet. Eine Rücklaufleitung 20, in der eine elektrisch angetriebene Pumpe 22 angeordnet ist, verbindet den Kühler 16 mit der Brennkraftmaschine 10 und schließt so einen Kühlkreislauf 24. An dem Kühlkreislauf 24 kann ein nicht näher dargestellter Heizkreislauf einer Fahrzeugheizung oder Klimaanlage direkt oder über einen Wärmetauscher angeschlossen sein.

Eine Bypassleitung 26 verbindet die Zulaufleitung 12 unter Umgehung des Kühlers 16 direkt mit der Rücklaufleitung 20. Die Bypassleitung überbrückt so den Kühler und mündet stromaufwärts der Pumpe 22 in die Rücklaufleitung 20. Die Kühlmittelströmung im Kühl- und Heizkreislauf ist durch Pfeile 28 angedeutet.

An der Abzweigung der Bypassleitung 26 von der Zulaufleitung 12 ist ein Dreiwegeventil 14 in Form eines Kükenventils vorgesehen, dessen Drosselkörper durch einen Elektromotor 30 stellbar ist. Der Elektromotor 30 wird von einer Steuereinheit 32 über Verbindungsmittel 34 angesteuert. Die Steuereinheit 32 wiederum ist über Signalleitungen 36 mit zahlreichen unterschiedlichen Sensoren 38 verbunden. Die Sensoren 38 erfassen Betriebsparameter des Verbrennungsmotors und des Kühl- bzw. Heizkreislaufs sowie Umgebungsparameter. Aus den Eingangsgrößen wird mit Hilfe mindestens eines zugeordneten Kennfeldes eine Stellgröße für den Elektromotor 30 erzeugt.

Durch die Stellung des Drosselkörpers des Ventils 14 kann der relative Kühlmittelvolumenstrom durch den Kühler 16 bzw. die Bypassleitung 26 eingestellt werden. Auf diese Weise ist es auch möglich, eine gewünschte Kühlmitteltemperatur durch Mischen der Teilvolumenströme des Kühlmittels saugseitig der Pumpe 22 einzustellen.

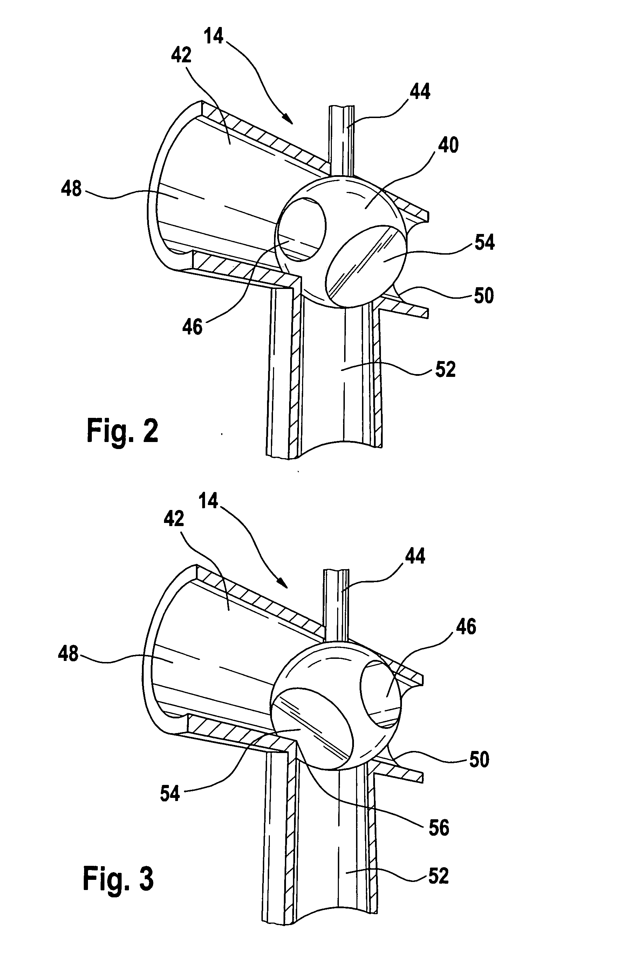

Wie in Figur 2 dargestellt, ist das Dreiwegemischventil 14 als Küken bzw. Kugelventil ausgebildet, dessen Drosselkörper 40 im Wesentlichen die Grundform einer Kugel besitzt. Der Drosselkörper 40 und der Ventilkörper 42, der das Ventilgehäuse bildet, sind Bestandteile des erfindungsgemäßen Dreiwegeventils 14. Der Drosselkörper 40 kann in vorteilhafter Weise ein Spritzgussteil aus einem Kunststoff, insbesondere aus einem thermoplastischen Kunststoff, sein. Vorzugsweise wird eine Antriebswelle 44 direkt an den Drosselkörper angespritzt. Der Drosselkörper 40 besitzt in seinem Inneren einen Verteilerkanal 46 in Form einer den Drosselkörper 40 durchdringenden Bohrung. Der Verteilerkanal 46 verläuft quer, vorzugsweise senkrecht zur Achse der Antriebswelle 44 und stellt bei entsprechender Drehung des Drosselkörpers eine Verbindung zwischen einem Einlasskanal 48 und einem Auslasskanal 50 des Ventils 14 her. In dem Ausführungsbeispiel des erfindungsgemäßen Ventils gemäß Figur 2 fluchten Einlasskanal 48 und Auslasskanal 50 direkt zueinander, so dass ein strömungstechnisch günstiger, da gerader Durchgang durch das erfindungsgemäße Ventil realisierbar ist.

Quer zur Richtung, die durch den Einlasskanal 48 und den Auslasskanal 50 definiert ist, ist im erfindungsgemäßen Ventil gemäß Figur 2 ein zweiter Auslasskanal 52 vorgesehen. Der Ventilkörper 42 ist über den Einlasskanal 48 mit dem von der Brennkraftmaschine 10 kommenden Teil der Zulaufleitung 12 sowie mit seinem Auslasskanal 50 mit der Kühlerzuleitung 13 des Kühlers verbindbar. Der zweite Auslasskanal 52 wird bei der Verwendung des erfindungsgemäßen Ventils in einem Kühl- und Heizkreislauf gemäß Figur 1 mit der Bypassleitung 26 verbunden. Die Anschlusskanäle 48, 50, 52 liegen in vorteilhafter Weise in einer Ebene.

So ist in der Darstellung des erfindungsgemäßen Ventils gemäß Figur 2 die Zulaufleitung 12 über den Einlasskanal 48, den Verteilerkanal 46 im Drosselkörper 40 des Ventils und den Auslasskanal 50 mit dem Kühler 16 verbunden. Die Bypassleitung 26 bzw. der ihr zugeordnete zweite Auslasskanal 52 des erfindungsgemäßen Ventils ist in dieser Stellung verschlossen. Auf diese Weise wird für eine Ventilstellung "Kühler offen" ein gerader Durchgang durch das Ventil realisiert, der besonders strömungsgünstig ist,.

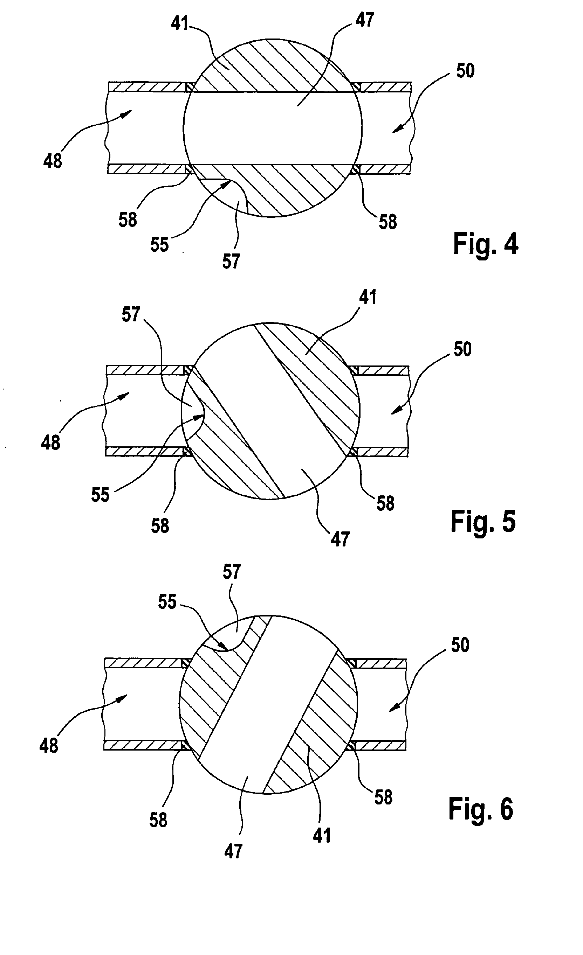

Die Kugel des Drosselkörpers 40 wird im Bereich der Anschlüsse 48 bzw. 50, die diametral zueinander liegen, durch entsprechende Dichtelemente, beispielsweise Dichtringe (siehe Figur 4 bis Figur 7) gedichtet. Dabei kommt die kugelförmige Oberfläche des Drosselkörpers in Richtung des Einlasskanals 48 bzw. des Auslasskanals 50 an die dort angeordneten ringförmigen Dichtelemente zur Anlage, so dass lediglich ein Kühlmittelvolumenstrom durch den Verteilerkanal 46 möglich ist. Die Kugel des erfindungsgemäßen Drosselventils 40 gemäß Figur 2 bzw. Figur 3 ist nur zuflussseitig und kühlerzweigseitig gedichtet. Die Dichtringe dienen dabei gleichzeitig als Führung für den kugelförmigen Drosselkörper 40. Neben den erwähnten Dichtringen sind für das erfindungsgemäße Ventil andere Dichtelemente und Dichtkonzepte selbstverständlich ebenso möglich. Ebenfalls möglich wäre beispielsweise eine Kombination aus einer Hartund einer Weichdichtung.

Durch Verdrehen der Antriebswelle 44 lässt sich der Öffnungsquerschnitt des Drosselkörpers 40 im Ventilkörper 42 variieren. Neben dem Verteilerkanal 46 besitzt die Oberfläche der Kugel des Drosselkörpers 40 eine Abschrägung in Form einer Fase 54, die zu einer Abweichung der Kugelform des Drosselkörpers 40 führt. Die Fase 54 des erfindungsgemäßen Dreiwegeventils ist im Ausführungsbeispiel nach Figur 2 eben ausgebildet. Andere Formen und Größen dieser Fase sind jedoch ebenso möglich. So seien auch Auskehlungen und Falzen in der Kugeloberfläche im Sinne der Erfindung als Fase anzusehen. Dabei ist die Fase strömungstechnisch getrennt von dem Verteilerkanal 46, der ebenfalls im Drosselkörper 40 ausgebildet ist. Eine direkte Verbindung zwischen dem Verteilerkanal und der Fase existiert nicht.

Die Anfasung der Kugel des Drosselkörpers 40 ist insbesondere so vorgenommen, dass in einer Stellung, in der der Auslasskanal 50 zum Kühlerzweig geschlossen ist, eine Öffnung 56 zum zweiten Auslasskanal 52 und damit zum Bypasskanal 26 entsteht. Der Öffnungsquerschnitt zum zweiten Auslasskanal 52 ist im Ausführungsbeispiel gemäß Figur 2 bzw. Figur 3 viel geringer gewählt, als der Öffnungsquerschnitt zum ersten Auslasskanal 50 bzw. zum Kühlerzweig 13.

Wird der Drosselkörper 40 durch Rotation der Antriebswelle 44 ausgehend von der Stellung in Figur 2 entgegen dem Uhrzeigersinn verdreht, so nimmt der Drosselkörper beispielsweise eine in Figur 3 dargestellte Stellung innerhalb des Ventilkörpers 42 ein.

Auf Grund der angefasten Kugelform des Drosselelementes 40 ergibt sich in dieser Stellung des Drosselkörpers ein Verbindungskanal 56 zwischen dem Einlasskanal 48 und dem zweiten Auslasskanal 52. Der erste Auslasskanal 50 wird durch die ihm zugewandte geschlossene Kugeloberfläche und die Dichtelemente im Auslasskanal vollständig geschlossen. Bei einer solchen Stellung des Drosselkörpers des erfindungsgemäßen Ventils würde der Kühlmittelvolumenstrom des Kühl- und Heizkreislaufes gemäß Figur 1 vollständig durch die Bypassleitung 26 geleitet und nicht über den Kühler 16 geführt werden. Über die spezielle Ausgestaltung der Form und Größe der Fase 54 des Drosselkörpers 40 lässt sich die Öffnungscharakteristik des zweiten Auslasskanals 52 variieren und so gewünschten Applikationen anpassen. Insbesondere lässt sich der Bypasskanal bzw. der durch den Bypasskanal geleitete Kühlfluidvolumenstrom durch Verdrehen des Drosselelementes 40 in gwünschter Weise androsseln.

Durch die relative Größe bzw. durch die gegenseitige Anordnung von Verteilerkanal 46 und Fase 54 des Drosselkörpers 40 lässt sich die Aufteilung des in das Ventil 14 einlaufenden Kühlmittelvolumenstroms auf die beiden Auslasskanäle 50 bzw. 52 den entsprechenden Anforderungen anpassen. So ist es beispielsweise möglich, eine Mischverhältniskennlinie für die beiden Auslasskanäle zu realisieren, die ein quasi lineares Verhalten zeigt.

Wird die Antriebswelle 44 ausgehend von der Stellung gemäß Figur 3 beispielsweise über einen Elektromotor um ca. 180 Grad gedreht, kann das Ventil vollkommen abgesperrt werden. In dieser Stellung wird die geschlossene Kugeloberfläche, die in Figur 3 in Richtung des Auslasskanals 50 weist, in den Einlasskanal 48 eingedreht. Die erfindungsgemäße Form des Drosselkörpers 40 des Ventils 14 ermöglicht die Vollabsperrung des Ventils mit lediglich zwei Dichtflächen, d.h. unter Verzicht einer zusätzlichen dritten Dichtfläche am zweiten Auslasskanal 52. Der Drosselkörper 40 des erfindungsgemäßen Ventils ist lediglich zuflussseitig und kühlerzweigseitig gedichtet. Aus der zweiseitigen Dichtung folgt, dass Volumenstromanteile, die bei Mischstellungen, d.h. Zwischenstellungen des Drosselkörpers, durch den Verteilerkanal 46 hindurch gegen seitliche Innenwände des Ventilkörpers 42 strömen, um den Drosselkörper 40 herum in den zweiten Auslasskanal 52 abfließen können. Eine Vergrößerung des Spaltes zwischen dem Ventilkörper 42 und dem Drosselkörper 40 durch eine entsprechende Konstruktion des das Ventilgehäuse bildenden Ventilkörpers kann eine deutliche Erhöhung des Durchflusses in den zweiten Verbindungskanal 52 zumindest in Mischstellungen des Drosselkörpers zur Folge haben. Die Strömungsverhältnisse bei zum Kühler geöffnetem Ventil (vgl. Fig. 2) verschlechtern sich durch eine solche Ausgestaltung nicht, da in diesem Fall ein gerader Durchgang analog zu einem herkömmlichen, d.h. ungefasten Kugelkörper realisiert ist, der beidseitig gedichtet ist.

In Figur 4 bis Figur 6 ist in schematischer Weise jeweils ein Schnitt durch ein zweites Ausführungsbeispiel eines gefasten kugelförmigen Drosselkörpers dargestellt. Der Drosselkörper 41 gemäß dem Ausführungsbeispiel der Figuren 4 bis 6 besitzt einen ihn durchdringenden Verteilerkanal 47, der in der in Figur 4 dargestellten Stellung des Drosselkörpers 41 einen lediglich angedeuteten Einlasskanal 48 mit einem Auslasskanal 50 direkt verbindet. Der ebenfalls vorhandene zweite Auslasskanal 52 ist unterhalb der in den Figuren 4 bis 6 dargestellten Schnittebene des Drosselkörpers 41 angeordnet und daher in dieser Darstellung nicht eingezeichnet. Die Drehachse des Drosselkörpers steht in diesem Ausführungsbeispiel des erfindungsgemäßen Ventils senkrecht aus der Zeichenebene heraus. Der Drosselkörper 41 besitzt eine Fase 55, die im Gegensatz zur Fase 54 des Ausführungsbeispiels nach Figur 2 bzw. Figur 3 konkav ausgebildet ist und ein kleineres Segment auf der Kugeloberfläche ausschneidet. Im Sinne dieser Erfindung seien alle derartige Kugelabschnitte bzw. Kugelausschnitte als verallgemeinerte Fasen anzusehen. Durch die konkave Ausformung der Fase 55 ist es möglich, trotz der verkürzten Bogenlänge des Ausschnittes auf der Kugeloberfläche einen Verbindungskanal 57 zu ermöglichen, der einen vergleichbaren Öffnungsquerschnitt mit dem Verbindungskanal 56 des Ausführungsbeispiels gemäß Figur 2 bzw. Figur 3 hat.

Im Einlasskanal 48 bzw. ebenso im Auslasskanal 50 ist jeweils ein Dichtelement in Form eines O-Rings 58 angeordnet, welche den Ventilkörper gegenüber dem Drosselkörper abdichten.

In der Stellung des Ventils gemäß Figur 5 ist der Auslasskanal 50 durch ein Oberflächensegment der geschlossenen Kugeloberfläche vollständig verschlossen. Der Einlasskanal 48 ist über den mittels der Fase 55 gebildeten Verbindungskanal 57 mit dem nicht dargestellten zweiten Auslasskanal 52 des erfindungsgemäßen Ventils verbunden.

Abhängig davon, wieweit der Drosselkörper 41 mit seiner Fase 55 in den Einlasskanal 58 hinein gedreht wird, kann der Kühlmittelvolumenstrom durch den Verbindungskanal 57 und den Bypasskanal 52 mehr oder minder stark angedrosselt werden.

Wird der Drosselkörper ausgehend von seiner Stellung in Figur 5 weiter im Uhrzeigersinn verdreht, so wird eine Position des Drosselkörpers 41 erreicht, bei der das erfindungsgemäße Ventil vollkommen abgesperrt ist. In dieser, in Figur 6 dargestellten Stellung des Drosselkörpers 41 sind sowohl der Einlasskanal 48, als auch der Auslasskanal 50 bzw. der zweite Auslasskanal 52 verschlossen. Dies wird dadurch erreicht, dass auf der gleichen Seite (in Bezug auf den Kanal 47) des kugelförmigen Drosselkörpers 41 auf der die Fase 55 angebracht ist, eine ausreichende, geschlossene Kugeloberfläche vorhanden ist, die in den Einlasskanal 48 hineingedreht werden kann und somit ein Absperren des Einlasskanals 48 gewährleistet. Auf Grund der konkaven Ausgestaltung der Fase 55 ist es, bei gleichzeitiger Gewährleistung eines hinreichend großen Querschnittes für den Verbindungskanal 57, möglich, auf der selben Seite relativ zum Verteilerkanal 47 eine genügend große, geschlossene Kugeloberfläche zu realisieren. In dieser Ausführungsform des erfindungsgemäßen Ventils ist es möglich, von der Stellung "Bypaß offen und Kühler geschlossen" direkt in die Stellung "Ventilvollabsperrung" (vgl. Fig. 6) zu gelangen, ohne dass die Stellung "Bypaß geschlossen und Kühler offen" (vgl. Fig. 4) durchlaufen werden muss. Letztgenannte Stellung des Drosselkörpers würde zu einer nachteiligen Absenkung der Kühlmitteltemperatur in erfindungsgemäßen Heiz- und Kühlkreislauf führen.

Das erfindungsgemäße Ventil zeichnet sich durch einen niedrigen Strömungswiderstand, insbesondere zum Kühlerzweig, durch eine feinfühlige Öffnungscharakteristik des Kühlerzweiges sowie durch die Möglichkeit der Vollabsperrung aus.

Das erfindungsgemäße Ventil ist nicht auf die in den Figuren dargestellten Ausführungsbeispiele beschränkt.

Insbesondere ist das erfindungsgemäße Ventil nicht beschränkt auf die Form und Größe der dargestellten Fase. Andere Kugelausschnitte und / oder Kugelabschnitte, die ebenfalls als Fasungen an der Kugeloberfläche des Drosselkörpers des erfindungsgemäßen Ventils anzusehen sind und insbesondere andere als plane Fasen, wie beispielsweise Falzen und Auskehlungen, sind bei dem erfindungsgemäßen Ventil ebenso möglich.

Das erfindungsgemäße Ventil ist nicht auf die Verwendung nur eines Einlasskanals und zweier Auslasskanäle beschränkt.

## Patentansprüche

1. Dreiwegeventil zur Steuerung von Volumenströmen in einem Kühl- /Heizsystem (24) eines Kraftfahrzeuges, mit einem als Gehäuse dienenden Ventilkörper (42) und einem drehbar im Ventilkörper (42) angeordneten Drosselkörper (40,41) mit im wesentlichen kugelförmiger Oberfläche, wobei im Drosselkörper (40,41) ein Verteilerkanal (46,47) zur Verbindung zweier Anschlusskanäle (48,50) des Ventils (14) ausgebildet ist, **dadurch gekennzeichnet, dass** die Oberfläche des Drosselkörpers (40,41) eine Fase (54,55) zur Öffnung eines dritten Anschlusskanals (52) aufweist.

2. Ventil nach Anspruch 1, **dadurch gekennzeichnet, dass** die Fase (54) plan ist.

3. Ventil nach Anspruch 1, **dadurch gekennzeichnet, dass** die Fase konkav (55) ist.

4. Ventil nach Anspruch 1,2 oder 3, **dadurch gekennzeichnet, dass** die Fase (54,55) unter einem von Null verschiedenen Winkel zur Verteilerkanal (46,47) des Drosselkörpers (40,41) verläuft.

5. Ventil nach einem der vorhergehenden Ansprüche, **dadurch gekennzeichnet, dass** die Fase (54,55) unter einem von Null verschiedenen Winkel zu der Drehachse (44) des Drosselkörper (40,41) verläuft.

6. Ventil nach einem der Ansprüche 1 bis 5, **dadurch gekennzeichnet, dass** der Dorsselkörper (40,41) auf einer Seite einer Ebene, die aufgespannt wird durch die Richtung des Verteilerkanals (46,47) und die Richtung der Drehachse (44) des Drosselkörpers, sowohl eine Fase (54,55) zur Öffnung eines dritten Anschlusskanals (52) aufweist, als auch als ein hinreichend großes Oberflächensegment zum Verschließen eines Anschlusskanals (48,50), insbesondere eines Einlasskanals (48) besitzt.

7. Ventil nach Anspruch 5, **dadurch gekennzeichnet, dass** der Drosselkörper (40,41) über eine Antriebswelle (44) von einer Steuereinheit (32) entsprechend einem Kennfeld in Abhängigkeit von Betriebsparametern und Umgebungsparametern ansteuerbar ist.

8. Ventil nach einem der vorhergehenden Ansprüche, **dadurch gekennzeichnet, dass** der Drosselkörper (40,41) aus Kunststoff, insbesondere einem thermoplastischen Kunststoff besteht und im Spritzgussverfahren hergestellt ist.

9. Ventil nach einem der vorhergehenden Ansprüche, **dadurch gekennzeichnet, dass** der Ventilkörper (42) drei Anschlüsse aufweist, wobei zwei Anschlüsse (48,50) zueinander fluchten und der dritte Anschluss (52) in einem von Null verschiedenen Winkel zu den beiden ersten Anschlüssen (48,50) angeordnet ist.

10. Ventil nach Anspruch 8, **dadurch gekennzeichnet, dass** der Ventilkörper (42) im Bereich der zueinander fluchtenden Anschlüsse (48,50) jeweils mindestens ein Dichtelement (58) aufweist.

11. Kühl- und Heizkreislauf (24) eines Kraftfahrzeuges mit mindestens einer Wärmequelle, insbesondere einem Verbrennungsmotor (10), einem von einem Kühlmittel durchströmbaren Kühler (16) und einer Bypassleitung (26), die eine Verbindung einer Zulaufleitung (12) für den Kühler (16) mit einer Kühlerrücklaufleitung (20) unter Umgehung des Kühlers (16) ermöglicht und an deren mindestens einer Abzweigung mindestens ein Steuerventil (14) angeordnet ist, das den Kühlmittelvolumenstrom zwischen einem Kühlerzulauf (13) und der Bypassleitung (26) in Abhängigkeit von Betriebsparametern der Wärmequelle (10) und/oder Umgebungsparametern entsprechend den Stellgrößen einer Steuereinheit (32) aufteilt, **dadurch gekennzeichnet, dass** das Steuerventil (14) einen Drosselkörper (40,41) mit kugelförmiger Grundform aufweist, in dem ein Verteilerkanal (46,47) zur Verbindung der Zulaufleitung (12) mit dem Kühlerzulauf (13) ausgebildet ist, wobei die Oberfläche des Drosselkörpers (40,41) zusätzlich eine Fase (54,55) zur Verbindung der Zulaufleitung (12) mit der Bypassleitung (26) aufweist.

12. Kühl- und Heizkreislauf (24) nach Anspruch 11, **dadurch gekennzeichnet, dass** die Fase (54,55) des Drosselkörper (40,41) derart ausgebildet ist, dass bei geschlossenem Kühlerzulauf (13) eine Öffnung des Ventils (14) zur Bypassleitung (26) erzielbar ist.

13. Kühl- und Heizkreislauf (24) nach Anspruch 11 oder 12, **dadurch gekennzeichnet, dass** neben dem Ventil (14) mindestens eine elektrisch angetriebene Kühlmittelpumpe (20) vorhanden ist.
